# FASCICULE DE BREVET EUROPEEN

(11) **EP 1 592 881 B1**
(45) Date de publication et mention de la délivrance du brevet: **12.12.2007**
(21) Numéro de dépôt: 04703815.3
(22) Date de dépôt: 21.01.2004
(51) Int. Cl.: F02N 15/06

(54) **PROCEDE DE MONTAGE D'UN ANNEAU D'ARRET SUR UN ARBRE DE DEMARREUR ELECTRIQUE MUNI D'UN LANCEUR ET DEMARREUR CORRESPONDANT**
VERFAHREN ZUR MONTAGE EINES HALTERRINGES AUF DER WELLE EINES ELEKTRISCHEN ANLASSERS MIT EINEM AXIAL-VERSCHIEBBAREN RITZEL UND ENTSPRECHENDER ANLASSER
METHOD OF MOUNTING A RETAINING RING ON AN ELECTRIC STARTER SHAFT COMPRISING A STARTER DRIVE ASSEMBLY AND CORRESPONDING STARTER

(30) Priorité: 21.01.2003 FR 0300644
(43) Date de publication de la demande: 09.11.2005
(73) Titulaire: VALEO EQUIPEMENTS ELECTRIQUES MOTEUR, 94017 Créteil-Cedex (FR)
(72) Inventeur: HALBIN, Philippe, F-38090 Villefontaine (FR); PALTRIE, Thierry, F-69008 Lyon (FR)
(74) Mandataire: Gamonal, Didier
(86) Numéro de dépôt international: PCT/FR2004/000130
(87) Numéro de publication internationale: WO 2004/067950

(56) Documents cités:
- EP-A- 0 494 681
- FR-A- 2 518 176
- FR-A- 2 649 349
- GB-A- 1 384 689
- US-A- 5 953 955
- US-B1- 6 169 333

## Description

### Domaine technique de l'invention

L'invention concerne un procédé de montage d'un anneau d'arrêt élastique ouvert sur un arbre rotatif de démarreur électrique, lequel est muni d'un lanceur comprenant un dispositif d'accouplement débrayable tel qu'un dispositif à roue libre coopérant avec deux séries de cannelures hélicoïdales de formes complémentaires agencées respectivement sur l'arbre et dans une douille du lanceur lequel arbre comporte une première butée arrière et une deuxième butée avant échelonnées le long de l'arbre pour définir la course de coulissement du lanceur, entre les positions de repos et de travail du pignon, ladite première butée arrière étant formée par ledit anneau d'arrêt élastique inséré dans une gorge de positionnement annulaire de l'arbre.

### État de la technique

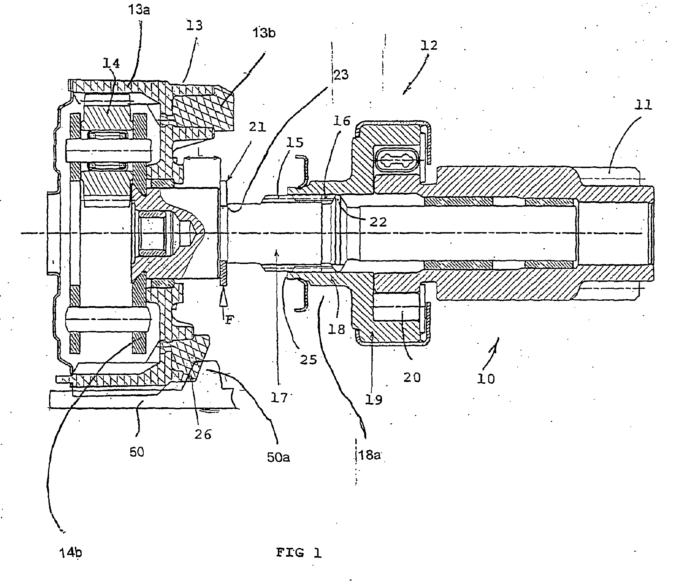

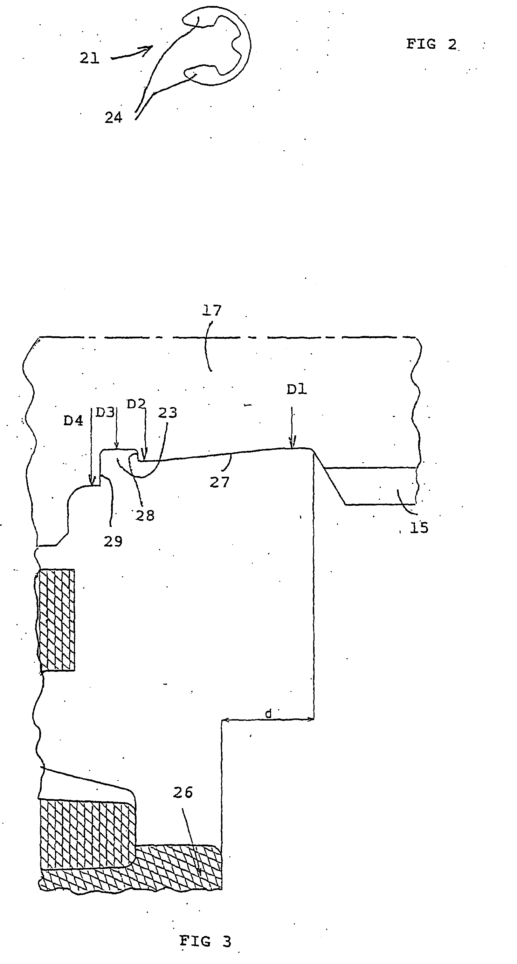

Sur les figures 1 et 2, un lanceur 10 d'un démarreur électrique, comportant un pignon 11 d'entraînement de la couronne dentée d'un moteur à combustion interne, tel que par exemple de véhicule automobile. Ce lanceur 10 comporte également une douille 18, appelée entraîneur et un dispositif d'accouplement débrayable 12 ici à roue libre intervenant entre le pignon 11 et la douille 18 de forme cylindrique. Deux séries de cannelures 15, 16 hélicoïdales de formes complémentaires sont prévues. Le dispositif de transmission à roue libre 12 est intercalé axialement entre le pignon 11 et un réducteur de vitesse 13 comportant une couronne externe dentée intérieurement 13a et coopérant avec des roues dentées 14 appelées satellites portés par un porte satellites 14b. Ce réducteur de vitesse est accouplé à l'extrémité cannelée de l'arbre du moteur électrique du démarreur tel que visible à la figure 1 du document WO 00/39454 auquel on se reportera pour plus de précisions, ce réducteur étant du type de celui décrit dans ce document. La douille 18 est solidaire d'une cage 19 appartenant à la roue libre 12. Un arbre 17 est accouplé au porte satellites 14b du réducteur 13. Cet arbre 17 pénètre à l'intérieur de la douille 18 et du pignon 11

Les deux séries de cannelures 15, 16 sont agencées respectivement sur l'arbre 17 et dans la douille 18 cylindrique du lanceur 10. Le pignon 11 est ainsi solidarisé à la douille 18 par le dispositif de transmission à roue libre 12, lequel permet d'entraîner le pignon 11 pendant la phase normale de démarrage, et de débrayer la liaison mécanique d'entraînement en rotation lorsque la vitesse de rotation du pignon 11 devient supérieure à celle de la douille 18. En fin de démarrage du moteur à combustion interne; la présence du dispositif à roue libre 12 évite que le pignon 11 en prise avec la couronne dentée du moteur à combustion interne entraîne le rotor du moteur électrique du démarreur à une vitesse excessive susceptible de détériorer ce dernier. Une telle situation peut intervenir lorsque l'automobiliste ne coupe pas l'alimentation du contacteur éléctromagnétique du démarreur immédiatement après le démarrage.

La roue libre 12 illustrée à la figure 1 est du type à galets 20 intervenant entre une piste de la cage 19 solidaire de la douille 18 et une piste intérieure solidaire du pignon 11. Mais il est clair que tout autre dispositif de transmission unidirectionnel peut être utilisé, notamment un élément d'accouplement débrayable à embrayage conique à friction tel que décrit par exemple dans le document FR 2772433.

En fin de démarrage, le lanceur 12 tend à se dévisser sur les cannelures 15 de l'arbre 17, ce qui engendre une force axiale tendant à ramener l'extrémité 25 de la douille 18 vers une butée arrière solidaire de l'arbre 17, laquelle est constituée par un anneau d'arrêt élastique 21 situé à l'opposé du pignon 11. Cette force axiale de réaction s'ajoute aux forces de rappel du noyau mobile du contacteur électromagnétique de conception classique, après la coupure de l'alimentation de ce dernier, au moyen d'un fourchette (non représentée) pivotant autour d'un axe et dont une extrémité est en liaison avec le noyau mobile et l'autre extrémité libre venant se loger dans la gorge 18a pour entraîner le lanceur en translation. Un tel contacteur électromagnétique et une telle fourchette sont décrits dans le document WO 00/39454 précité. Le pignon 11 s'échappe rapidement de la couronne dentée avec une vitesse suffisante pour éviter une usure et une détérioration des extrémités des dents.

Une butée avant 22 est agencée sur l'arbre 17 du lanceur pour définir la position de fin de course du pignon 11 en engagement sur la couronne dentée. L'intervalle axial séparant la butée avant 22 de l'anneau d'arrêt 21 détermine la course de coulissement du lanceur 12, respectivement entre la position de repos et la position de travail du pignon 11.

L'anneau d'arrêt 21 (figure 2) est ouvert, en présentant une forme de C, et une épaisseur est de l'ordre de 1 à 1,5mm. L'écartement entre les becs 24 d'extrémités du C est légèrement inférieur au diamètre de la gorge de positionnement 23 prévue sur l'extrémité arrière de l'arbre 17 du lanceur 10. Dans la position de repos, l'extrémité 25 de la douille 18 vient en butée contre l'anneau d'arrêt 21.

Les règles de montage habituelles de ce type de circlips consistent à exercer une poussée radiale (flèche F, figure 1) sur la partie médiane de l'anneau 21 pour l'insérer dans la gorge de positionnement 23 selon une direction perpendiculaire à l'arbre 17. Le resserrement des becs 24 après insertion permet un maintien stable de l'anneau d'arrêt 21 dans la gorge 23.

Un tel montage radial de l'anneau d'arrêt 21 d'un lanceur connu n'est possible que si la gorge de positionnement 23 est accessible vis-à-vis de la protubérance 26 du réducteur de vitesse 13. Cette protubérance 26 consiste par exemples en des plots 13b amortisseurs élastiques reçus à l'intérieur de logements 50a du carter 50 (partiellement représenté) du démarreur. Ainsi ces moyens élastiques 13b autorisent un mouvement de rotation qui permet d'amortir les chocs et donc une réduction du bruit. Pour plus de précisions, on se reportera par exemple au document WO 00/39454. En variante de réalisation, cette protubérance 26 peut consister en des plots non élastiques.

L'ensemble constitué par le pignon 11, le dispositif d'accouplement débrayable 12 et le réducteur de vitesse 13 et introduit, après le placement de l'anneau d'arrêt 21 dans sa gorge 23, dans le carter 50 du démarreur.

L'arbre 17 du lanceur 10 doit être rallongé axialement d'une distance L pour autoriser l'insertion de l'anneau d'arrêt 21. Il en résulte une augmentation de l'encombrement longitudinal du démarreur.

Dans le document FR 2 518 176 le démarreur présente une première butée arrière, sous la forme d'une bague d'arrêt, et un enroulement constituant une butée avant pour une armature coopérant axialement avec un lanceur via des moyens de liaison.

Dans ce document le démarreur est dépourvu de réducteur de vitesses et la bague d'arrêt est disposé dans une zone accessible. En autre la butée avant n'est pas agencée sur l'arbre du démarreur.

Dans le document US. 5 953 955 il est prévu une butée arrière pour le lanceur, qui se monte dans une gorge de l'arbre du démarreur par déformation, la butée étant initialement de forme tronconique.

Dans ces deux documents il n'est pas prévu de butée arrière sans la forme d'un anneau élastique ouvert.

### Objet de l'invention

L'invention a pour but de pallier ces inconvénients, et d'élaborer un procédé de montage facilitant l'insertion de l'anneau élastique et ouvert d'arrêt d'un lanceur avec butées sur cannelures, sans nécessiter un rallongement de l'arbre du démarreur.

Conformément à l'invention ce problème est résolu par la partie caractérisante de la revendication 1.

L'anneau d'arrêt est inséré radialement sur l'arbre dans une zone libre de toute pièce environnante, et un déplacement manuel du lanceur dans le sens axial pousse ensuite l'anneau dans la gorge en retrait, où l'accès radial ne serait pas possible. Un tel montage permet de réduire l'encombrement longitudinal du démarreur.

L'invention concerne également un démarreur électrique pour véhicule automobile caractérisé par la partie caractérisante de la revendication 4.

Grâce à cette disposition on peut monter l'anneau d'arrêt dans une gorge de positionnement situé dans une zone de service privée d'accés radical sans augmenter l'encombrement longitudinal du démarreur.

Le dispositif peut avantageusement être complété par une ou plusieurs des caractéristiques suivantes :
- la gorge de positionnement comporte une face frontale destinée à bloquer axialement l'anneau d'arrêt dans la zone de service ;
- la gorge de positionnement est délimitée en regard de la face frontale, par une face de butée annulaire, dont la largeur est supérieure à celle de la face frontale ;
- la longueur axiale de la gorge séparant la face frontale de la face de butée est choisie pour recevoir un ou plusieurs anneaux d'arrêt élastiques ;
- la gorge de positionnement est séparée axialement des cannelures de l'arbre du lanceur par un tronçon d'arbre de forme tronconique.

### Description sommaire des dessins

D'autres avantages et caractéristiques ressortiront plus clairement de la description qui va suivre d'un procédé de montage selon l'invention donné à titre d'exemple non limitatif, et représenté aux dessins annexés, dans lesquels :
- la figure 1 montre une vue en coupe du lanceur d'un démarreur de l'art antérieur ;
- la figure 2 est une vue de détail de l'anneau d'arrêt constituant la butée arrière de l'arbre du lanceur ;
- la figure 3 est une demi-vue schématique en coupe et à échelle agrandie d'une partie de l'arbre de lanceur permettant la mise en oeuvre du procédé de montage selon l'invention ;
- les figures 4 et 5 représentent des vues identiques de la figure 1, illustrant les étapes de montage selon l'invention de l'anneau d'arrêt, en cas de non-accès à la gorge de positionnement selon la figure 3.

### Description d'un exemple de réalisation selon l'invention

Sur les figures 3 à 5, les mêmes numéros de repères seront utilisés pour désigner des pièces similaires ou identiques à celles des figures 1 et 2.

En référence à la figure 3, la gorge de positionnement annulaire 23 de l'arbre 17 du lanceur 10 est séparée axialement des cannelures 15 internes par un tronçon d'arbre 27 à section progressive, par exemple tronconique. Le diamètre D1 du tronçon d'arbre 27 du côté des cannelures 15 est inférieur à celui D2 proche de la face frontale 28 de la gorge 23. La face frontale 28 est sensiblement perpendiculaire à l'axe longitudinal de l'arbre 17, mais peut également être inclinée et avoir un profil non rectiligne.

Le diamètre D1 du tronçon d'arbre 27 est voisin du diamètre admissible par l'anneau d'arrêt élastique ouvert sans déformation élastique de ce dernier. De préférence, le diamètre D1 est égal au diamètre D3 de fond de gorge 23 préconisé par le fabricant de l'anneau 21.

En regard de la face frontale 28, la gorge 23 est délimitée par une face de butée 29 annulaire, dont la largeur correspond à la différence des diamètres D4 et D3. Cette largeur est suffisante pour résister à la poussée axiale due au retour du lanceur en position de repos, et est supérieure à la largeur de la face frontale 28 correspondant à la différence des diamètres D2 et D3. Avantageusement, la face 29 appartient à une surépaisseur que présente l'arbre 17 pour sa fixation sur le porte-satellite 14b. Cette surépaisseur à un diamètre supérieur à celui du tronçon 27.

La zone de montage radial de l'anneau d'arrêt 21 élastique s'effectue dans une première étape dans l'espace axial d situé entre la protubérance 26 et l'extrémité des cannelures 15. Cet espace d permet l'insertion radiale de l'anneau 21 sur la partie accessible du tronçon d'arbre 27.

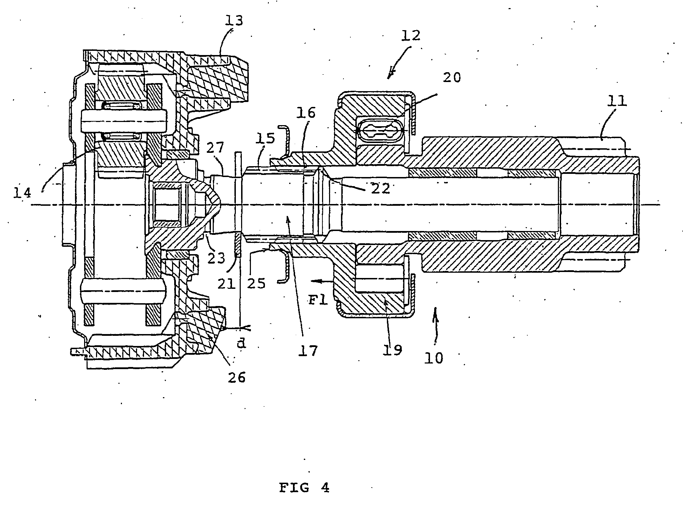

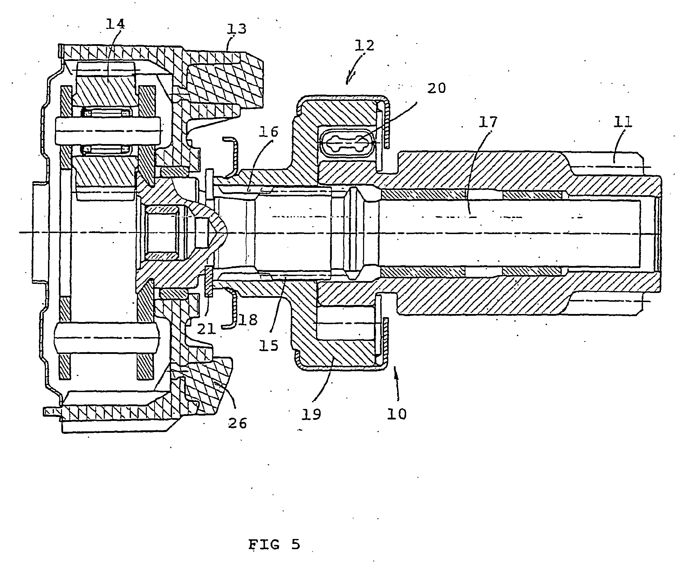

La figure 4 illustre cette première étape d'insertion de l'anneau d'arrêt 21 dans l'espace accessible. Il suffit de pousser radialement l'anneau 21 sur le tronçon d'arbre 27 comme à la figure 1. La protubérance 26 ne gêne pas cette opération de montage. Avantageusement comme visible aux figures 4 et 5 les protubérences 26 n'ont pas toutes la même forme. Certaines de ces protubérences sont plus courtes pour encore réduire la longueur axiale de l'arbre 17 et permettre un montage aisé du circlips.

Pour transférer l'anneau d'arrêt 21 dans la gorge de positionnement 23 se trouvant en retrait de la protubérance 26, on déplace le lanceur 10 dans le sens de la flèche F1, de manière que l'extrémité arrière 25 de la douille 18 pousse axialement l'anneau 21 le long du tronçon d'arbre 27, et en direction du réducteur 13, jusqu'à la venue en engagement dans la gorge de positionnement 23. Il est ainsi possible d'insérer l'anneau d'arrêt 21 dans la gorge de positionnement 23 qui se trouve dans une zone de service privée d'accès radial, et sans pour autant augmenter l'encombrement longitudinal du démarreur. Lors de son déplacement le long du tronçon d'arbre 27, l'anneau 21 s'ouvre progressivement puis se referme lorsqu'il tombe dans la gorge 23.
Bien évidement, sans sortir du cadre de l'invention, les protubérances 26 peuvent consister en tout agencement autre que des plots élastiques (par exemple en élastomère) ou en plastique destinés à coopérer avec le carter du démarreur. Il pourrait s'agir par exemple d'une excroissance de la courronne extérieure du réducteur de vitesse. Par protubérance, il faut comprendre tout dispositif qui empêche l'accés radial direct à la gorge 23 destinée à recevoir la butée 21.

## Revendications

1. Procédé de montage d'un anneau d'arrêt élastique ouvert (21) sur un arbre (17) rotatif de démarreur électrique comprenant :
- un réducteur de vitesse (13) accouplé à l'arbre (17) et comprenant une protubérance (26) ;
- un lanceur (10) comprenant une douille (18), un pignon (11) d'entraînement de la couronne dentée d'un moteur à combustion interne et un dispositif d'accouplement débrayable (12) d'une part, intervenant entre la douille (18) et le pignon (11) et d'autre part, intercalé axialement entre le réducteur de vitesse (13) et le pignon (11);
- deux séries de cannelures (16, 15), qui coopèrent entre elles et qui sont agencées respectivement dans la douille (18) du lanceur (10) et sur l'arbre (17) pénétrant à l'intérieur de la douille (18) ;
- une première butée arrière (21) et une deuxième butée avant (22) agencées sur l'arbre (17) et échelonnées le long de l'arbre (17) pour définir la course de coulissement du lanceur (10) respectivement entre la position de repos du pignon (11) et la position de travail du pignon (11) en engagement sur la couronne dentée ;
- une gorge (23) de positionnement annulaire prévue sur l'extrémité arrière de l'arbre (17) pour insertion d'un anneau d'arrêt élastique ouvert (21) formant la première butée arrière ,
dans lequel le-pignon (11), le dispositif d'accouplement débrayable (12) et le réducteur de vitesse (13) constituent un ensemble introduit, après placement de l'anneau d'arrêt (21) dans sa gorge (23), dans un carter (50) que comporte le démarreur
**caractérisé en ce que** partant d'un configuration dans laquelle la gorge (23) se trouve en retrait de la protubérance (26) du réducteur de vitesse (13) dans une zone de service privée d'accès radial:
- dans une première étape, on monte radialement l'anneau d'arrêt (21) sur un tronçon d'arbre (27) axial à section progressive situé dans une zone de montage radial accessible entre la gorge (23) et les cannelures (15),
- et dans une deuxième étape, on déplace axialement le lanceur (10) vers sa position de repos de manière à entraîner l'anneau d'arrêt (21) le long du tronçon d'arbre (27) jusqu'à la gorge de positionnement (23), laquelle est agencée dans une zone de service dépourvue d'accès radial.

2. Procédé de montage selon la revendication 1 , **caractérisé en ce qu'**on utilise un tronçon d'arbre (27) de section croissante vers la gorge de positionnement (23).

3. Procédé de montage selon la revendication 1 ou 2, **caractérisé en ce que** la douille (18) présente une face arrière (25) qui lors de la deuxième étape pousse axialement, en direction du réducteur de vitesse (13), l'anneau d'arrêt (21) le long du tronçon d'arbre (27) jusqu'à la venue en engagement dans la gorge de positionnement (23).

4. Démarreur électrique pour véhicule automobile comprenant :
- un arbre rotatif (17) ;
- un réducteur de vitesse (13) accouplé à l'arbre (17) et comprenant une protubérance (26) ;
- un lanceur (10) comprenant une douille (18), un pignon (11) d'entraînement de la couronne dentée d'un moteur à combustion interne et un dispositif d'accouplement débrayable (12) d'une part, intervenant entre la douille (18) et le pignon (11) et d'autre part, intercalé axialement entre le réducteur de vitesse (13) et le pignon (11);
- deux séries de cannelures (16, 15), qui coopèrent entre elles et qui sont agencées respectivement dans la douille (18) du lanceur (10) et sur l'arbre (17) pénétrant à l'intérieur de la douille (18) ;
- une première butée arrière (21) et une deuxième butée avant (22) agencées sur l'arbre (17) et échelonnées le long de l'arbre pour définir la course de coulissement du lanceur (10) respectivement entre la position de repos du pignon (11) et la position de travail de travail du pignon (11) en engagement sur la couronne dentée,
- une gorge (23) de positionnement annulaire prévue sur l'extrémité arrière de l'arbre (17) pour insertion d'un anneau d'arrêt élastique ouvert (21) formant la première butée arrière,
dans lequel le pignon (11), le dispositif d'accouplement débrayable (12) et le réducteur de vitesse (13) constituent un ensemble destiné à être introduit, après placement de l'anneau d'arrêt (21) dans sa gorge (23), dans un carter (50) que comporte le démarreur
**caractérisé en ce que** la gorge de positionnement (23) se trouve dans une zone de service privée d'accès radial, et en retrait d'une protubérance (26) du réducteur de vitesse (13) destiné à être reçue dans le carter (50), **en ce que** la gorge de positionnement (23) est séparée axialement des cannelures (15) de l'arbre (17) par un tronçon d'arbre (27) à section progressive, le diamètre (D1) du côté des cannelures (15) étant inférieur au diamètre (D2) proche de la face frontale (28) de ladite gorge.

5. Démarreur électrique selon la revendication 4, **caractérisé en ce que** la gorge de positionnement (23) comporte une face frontale (28) agencée pour bloquer axialement l'anneau d'arrêt (21) dans la zone de service.

6. Démarreur électrique selon la revendication 5, **caractérisé en ce que** la gorge de positionnement (23) est délimitée en regard de la face frontale (28), par une face de butée (29) annulaire, dont la largeur est supérieure à celle de la face frontale (28).

7. Démarreur électrique selon la revendication 6, **caractérisé en ce que** la longueur axiale de la gorge (23) séparant la face frontale (28) de la face de butée (29) est choisie pour recevoir un ou plusieurs anneaux d'arrêt (21) élastiques.

8. Démarreur électrique selon la revendication 6 ou 7, **caractérisé en ce que** la face de butée (29) appartient à une surépaisseur que présente l'arbre (17) pour sa fixation sur un porte satellites (14b) appartenant au réducteur de vitesse (13).

9. Démarreur électrique selon l'une quelconque des revendications 6 à 8, **caractérisé en ce que** la gorge de positionnement (23) est séparée axialement des cannelures (15) de l'arbre (17) par un tronçon d'arbre (27) de forme tronconique.

10. Démarreur électrique selon l'une quelconque des revendications 4 à 9, **caractérisé en ce que** le dispositif d'accouplement débrayable (12) consiste en une roue libre.

## Claims

1. Method for fitting an open resilient stop ring (21) on a rotary shaft (17) of an electric starter, comprising:
- a reducing gear (13) which is coupled to the shaft (17), and comprises a protuberance (26);
- a launcher (10) comprising a bush (18), a pinion (11) to drive the toothed ring of an internal combustion engine and a disengageable coupling device (12), which firstly intervenes between the bush (18) and the pinion (11), and secondly is interposed axially between the reducing gear (13) and the pinion (11);
- two series of grooves (16, 15) which co-operate with one another, and are arranged respectively in the bush (18) of the launcher (10) and in the shaft (17) which penetrates inside the bush (18);
- a first, rear stop (21) and a second, front stop (22) which are arranged on the shaft (17) and are spaced along the shaft (17) in order to define the course of sliding of the launcher (10), respectively between the position of rest of the pinion (11) and the position of work of the pinion (11), whilst being engaged on the toothed ring;
- an angular positioning channel (23) which is provided on the rear end of the shaft (17) for insertion of an open resilient stop ring (21) which forms the first rear stop,
wherein the pinion (11), the disengageable coupling device (12) and the reducing gear (13) constitute an assembly which is introduced, after the stop ring (21) has been placed in its channel (23), in a housing (50) which the starter comprises, **characterised in that**, starting from a configuration in which the channel (23) is recessed from the protuberance (26) of the reducing gear (13) in a service area which has no radial access:
- in a first step, the stop ring (21) is fitted radially on an axial section of shaft (27) with a progressive cross-section (16) situated in a radial fitting area which is accessible between the channel (23) and the grooves (15); and
- in a second step, the launcher (10) is displaced axially towards its position of rest, such as to drive the stop ring (21) along the section of shaft (27) as far as the positioning channel (23), which is provided in a service area which has no radial access.

2. Fitting method according to claim 1, **characterised in that** a section of shaft (27) is used with a cross-section which increases towards the positioning channel (23).

3. Fitting method according to claim 1 or claim 2, **characterised in that** the bush (18) has a rear surface (25) which, during the second step, thrusts the stop ring (21) axially in the direction of the reducing gear (13), along the section of shaft (27), until the ring engages in the positioning groove (23).

4. Electric starter for a motor vehicle, comprising:
- a rotary shaft (17);
- a reducing gear (13) which is coupled to the shaft (17), and comprises a protuberance (26);
- a launcher (10) comprising a bush (18), a pinion (11) to drive the toothed ring of an internal combustion engine and a disengageable coupling device (12), which firstly intervenes between the bush (18) and the pinion (11), and secondly is interposed axially between the reducing gear (13) and the pinion (11);
- two series of grooves (16, 15) which co-operate with one another, and are arranged respectively in the bush (18) of the launcher (10) and in the shaft (17) which penetrates inside the bush (18);
- a first, rear stop (21) and a second, front stop (22) which are arranged on the shaft (17) and are spaced along the shaft in order to define the course of sliding of the launcher (10), respectively between the position of rest of the pinion (11) and the position of work of the pinion (11), whilst being engaged on the toothed ring;
- an angular positioning channel (23) which is provided on the rear end of the shaft (17) for insertion of an open resilient stop ring (21) which forms the first rear stop,
wherein the pinion (11), the disengageable coupling device (12) and the reducing gear (13) constitute an assembly which is introduced, after the stop ring (21) has been placed in its channel (23), in a housing (50) which the starter comprises, **characterised in that** the positioning channel (23) is in a service area which has no radial access, and recessed from a protuberance (26) of the reducing gear (13) which is designed to be received in the housing (50), and **in that** that positioning channel (23) is separated axially from the grooves (15) in the shaft (17) by a section of shaft (27) with a progressive cross-section, the diameter (D1) of the side of the grooves (15) being smaller than the close diameter (D2) of the front surface (28) of the said channel.

5. Electric starter according to claim 4, **characterised in that** the positioning channel (23) comprises a front surface (28) which is designed to block the stop ring (21) axially in the service area.

6. Electric starter according to claim 5, **characterised in that** the positioning channel (23) is delimited opposite the front surface (28) by an annular stop surface (29), the width of which is greater than that of the front surface (28).

7. Electric starter according to claim 6, **characterised in that** the axial length of the channel (23) which separates the front surface (28) from the stop surface (29) is selected such as to receive one or a plurality of resilient stop rings (21).

8. Electric starter according to claim 6 or claim 7, **characterised in that** the stop surface (29) belongs to an additional thickness which the shaft (17) has in order to be secured to a satellite-holder (14b) which belongs to the reducing gear (13).

9. Electric starter according to any one of claims 6 to 8, **characterised in that** the positioning channel (23) is separated axially from the grooves (15) in the shaft (17) by a section of shaft (27) with a frusto-conical form.

10. Electric starter according to any one of claims 4 to 9, **characterised in that** the disengageable coupling device (12) consists of a free wheel.

## Patentansprüche

1. Verfahren zur Montage eines offenen elastischen Halterings (21) an einer rotierenden Welle (17) eines elektrischen Anlassers mit:
- einem Untersetzungsgetriebe (13), das an die Welle (17) gekoppelt ist und eine Ausstülpung (26) umfasst;
- einer Einspurvorrichtung (10), die eine Hülse (18), ein Ritzel (11) zum Antreiben des Zahnkranzes eines Verbrennungsmotors und eine ausrückbare Kopplungsvorrichtung (12) umfasst, die einerseits zwischen der Hülse (18) und dem Ritzel (11) zum Einsatz kommt und andererseits axial zwischen dem Untersetzungsgetriebe (13) und dem Ritzel (11) eingefügt ist;
- zwei Reihen von Nuten (16, 15), die untereinander zusammenwirken und die in der Hülse (18) der Einspurvorrichtung (10) bzw. an der Welle (17) angeordnet sind, die in das Innere der Hülse (18) eindringt;
- einem hinteren ersten Anschlag (21) und einem vorderen zweiten Anschlag (22), die an der Welle (17) angeordnet und entlang der Welle (17) verteilt sind, um den Verschiebeweg der Einspurvorrichtung (10) zwischen der Ruheposition des Ritzels (11) und der Arbeitsposition des Ritzels (11) im Eingriff am Zahnkranz zu definieren;
- einer ringförmigen Positionierrille (23), die am hinteren Ende der Welle (17) für das Einsetzen eines offenen elastischen Halterings (21), der den hinteren ersten Anschlag bildet, vorgesehen ist,
wobei das Ritzel (11), die ausrückbare Kopplungsvorrichtung (12) und das Untersetzungsgetriebe (13) eine Baugruppe bilden, die nach dem Einsetzen des Halterings (21) in seiner Rille (23) in ein Gehäuse (50), das der Anlasser umfasst, eingesetzt wird,
**dadurch gekennzeichnet, dass**, ausgehend von einer Konfiguration, in der sich die Rille (23) von der Ausstülpung (26) des Untersetzungsgetriebes (13) zurückversetzt in einem Einsatzbereich ohne radialen Zugang befindet,
- in einem ersten Schritt der Haltering (21) radial auf einem axialen Wellenstück (27) mit zunehmendem Querschnitt angebracht wird, das sich in einem zugänglichen radialen Montagebereich zwischen der Rille (23) und den Nuten (15) befindet,
- und in einem zweiten Schritt die Einspurvorrichtung (10) axial zu ihrer Ruheposition verschoben wird, so dass der Haltering (21) entlang des Wellenstücks (27) bis zu der Positionierrille (23) mitgenommen wird, die in einem Einsatzbereich ohne radialen Zugang angeordnet ist.

2. Montageverfahren nach Anspruch 1, **dadurch gekennzeichnet, dass** ein Wellenstück (27) mit zunehmendem Querschnitt zur Positionierrille (23) hin verwendet wird.

3. Montageverfahren nach Anspruch 1 oder 2, **dadurch gekennzeichnet, dass** die Hülse (18) eine rückseitige Fläche (25) aufweist, die beim zweiten Schritt den Haltering (21) axial in Richtung des Untersetzungsgetriebes (13) entlang des Wellenstücks (27) bis zum Eingreifen in der Positionierrille (23) drückt.

4. Elektrischer Anlasser für Kraftfahrzeuge mit
- einer rotierenden Welle (17);
- einem Untersetzungsgetriebe (13), das an die Welle (17) gekoppelt ist und eine Ausstülpung (26) umfasst;
- einer Einspurvorrichtung (10), die eine Hülse (18), ein Ritzel (11) zum Antreiben des Zahnkranzes eines Verbrennungsmotors und eine ausrückbare Kopplungsvorrichtung (12) umfasst, die einerseits zwischen der Hülse (18) und dem Ritzel (11) zum Einsatz kommt und andererseits axial zwischen dem Untersetzungsgetriebe (13) und dem Ritzel (11) eingefügt ist;
- zwei Reihen von Nuten (16, 15), die untereinander zusammenwirken und die in der Hülse (18) der Einspurvorrichtung (10) bzw. an der Welle (17) angeordnet sind, die in das Innere der Hülse (18) eindringt;
- einem hinteren ersten Anschlag (21) und einem vorderen zweiten Anschlag (22), die an der Welle (17) angeordnet und entlang der Welle (17) verteilt sind, um den Verschiebeweg der Einspurvorrichtung (10) zwischen der Ruheposition des Ritzels (11) und der Arbeitsposition des Ritzels (11) im Eingriff am Zahnkranz zu definieren;
- einer ringförmigen Positionierrille (23), die am hinteren Ende der Welle (17) für das Einsetzen eines offenen elastischen Halterings (21), der den hinteren ersten Anschlag bildet, vorgesehen ist,
wobei das Ritzel (11), die ausrückbare Kopplungsvorrichtung (12) und das Untersetzungsgetriebe (13) eine Baugruppe bilden, die nach dem Einsetzen des Halterings (21) in seiner Rille (23) in ein Gehäuse (50), das der Anlasser umfasst, eingesetzt wird,
**dadurch gekennzeichnet, dass** sich die Positionierrille (23) in einem Einsatzbereich ohne radialen Zugang und von einer Ausstülpung (26) des Untersetzungsgetriebes (13) zurückversetzt befindet, das für die Aufnahme im Gehäuse (50) bestimmt ist, und **dass** die Positionierrille (23) von den Nuten (15) der Welle (17) durch ein Wellenstück (27) mit zunehmendem Querschnitt axial getrennt ist, wobei der Durchmesser (D1) auf der Seite der Nuten (15) kleiner als der Durchmesser (D2) nahe der Stirnfläche (28) der besagten Rille ist.

5. Elektrischer Anlasser nach Anspruch 4, **dadurch gekennzeichnet, dass** die Positionierrille (23) eine Stirnfläche (28) umfasst, die angeordnet ist, um den Haltering (21) im Einsatzbereich axial zu arretieren.

6. Elektrischer Anlasser nach Anspruch 5, **dadurch gekennzeichnet, dass** die Positionierrille (23) gegenüber der Stirnfläche (28) durch eine ringförmige Anschlagfläche (29) begrenzt wird, deren Breite größer als die Breite der Stirnfläche (28) ist.

7. Elektrischer Anlasser nach Anspruch 6, **dadurch** g**ekennzeichnet, dass** die axiale Länge der Rille (23), welche die Stirnfläche (28) von der Anschlagfläche (29) trennt, so gewählt ist, dass ein oder mehrere elastische Halteringe (21) aufgenommen werden können.

8. Elektrischer Anlasser nach Anspruch 6 oder 7, **dadurch gekennzeichnet, dass** die Anschlagfläche (29) zu einer Erhebung gehört, welche die Welle (17) für ihre Befestigung an einem Planetenträger (14b) aufweist, der zu dem Untersetzungsgetriebe (13) gehört.

9. Elektrischer Anlasser nach einem der Ansprüche 6 bis 8, **dadurch gekennzeichnet, dass** die Positionierrille (23) von den Nuten (15) der Welle (17) durch ein kegelstumpfförmiges Wellenstück (27) axial getrennt ist.

10. Elektrischer Anlasser nach einem der Ansprüche 4 bis 9, **dadurch gekennzeichnet, dass** die ausrückbare Kopplungsvorrichtung (12) aus einem Freilauf besteht.
